# FASCICULE DE BREVET EUROPEEN

(11) **EP 2 196 908 B1**
(45) Date de publication et mention de la délivrance du brevet: **04.01.2012**
(21) Numéro de dépôt: 09306209.9
(22) Date de dépôt: 11.12.2009
(51) Int. Cl.: G06F 11/16, G05B 9/03

(54) **Système électronique avec redondance d'éléments, et chaîne de contrôle d'un moteur mettant en oeuvre un tel système**
Elektronisches System mit Elemente-Redundanz und Steuerungskette eines Motors, der dieses System verwendet
Electronic system with redundancy of elements and motor control chain implementing such a system

(30) Priorité: 15.12.2008 FR 0858569
(43) Date de publication de la demande: 16.06.2010
(73) Titulaire: Converteam Technology Ltd, Rugby Warwickshire CV21 1BU (GB)
(72) Inventeur: Begey, Michel, 90300 Offemont (FR); Misson, Jean-Luc, 77690 Montigny sur Loing (FR)
(74) Mandataire: Jacobson, Claude

(56) Documents cités:
- EP-A- 0 399 308
- FR-A- 2 561 410
- US-A- 5 107 425
- US-A- 5 838 899
- US-A1- 2008 124 073

## Description

La présente invention concerne un système électronique avec redondance d'éléments, comprenant :
- une première unité de traitement, apte à mettre en oeuvre des algorithmes, reliée à une première carte d'acquisition de signaux d'entrée propres à être délivrés par au moins un capteur et/ou de génération de signaux de sortie propres à commander au moins un actionneur,
- une deuxième unité de traitement apte à mettre en oeuvre les mêmes algorithmes que ceux mis en oeuvre par la première unité, et reliée à une deuxième carte d'acquisition des mêmes signaux d'entrée propres à être délivrés par le capteur que ceux reçus par la première carte et/ou de génération des mêmes signaux de sortie propres à commander l'actionneur que ceux générés par la première carte,
chaque unité de traitement et chaque carte comportant un premier port de communication, les premiers ports de communication de la première unité et de la première carte, respectivement de la deuxième unité et de la deuxième carte, étant connectés entre eux par une liaison filaire de communication.

L'invention concerne également une chaîne d'entraînement, comprenant un moteur électrique et un tel système, ledit système étant destiné à vérifier le bon fonctionnement du moteur.

On connaît un système électronique avec une redondance classique, comprenant deux chaînes de traitement agencées en parallèle. La première chaîne comporte une première unité de traitement apte à mettre en oeuvre des algorithmes, et une pluralité de premières cartes d'entrée/sortie reliées en série à la première unité. Chaque première carte est propre à acquérir des signaux d'entrée délivrés par une pluralité de capteurs et/ou à générer des signaux de sortie pour commander une pluralité d'actionneurs. La deuxième chaîne comporte une deuxième unité de traitement apte à mettre en oeuvre les mêmes algorithmes que ceux mis en oeuvre par la première unité, et une pluralité de deuxièmes cartes reliées en série à la deuxième unité. Chaque deuxième carte est apte à acquérir les mêmes signaux d'entrée qu'une première carte respective, et à générer les mêmes signaux de sortie que ladite première carte respective. Autrement dit, la deuxième unité de traitement est fonctionnellement identique à la première unité de traitement, et chaque deuxième carte est fonctionnellement identique à une première carte respective. La première unité de traitement et la deuxième unité de traitement sont reliées entre elles par une première et une deuxième liaison filaires de communication, la deuxième liaison étant redondante de la première.

Chaque unité de traitement et chaque carte comportent un deuxième port de communication, en ce que le deuxième port de la première carte est connecté au deuxième port de la deuxième unité par une liaison filaire de communication, en ce que le deuxième port de la deuxième carte est connecté au deuxième port de la première unité par une liaison filaire de communication.

Toutefois, la défaillance d'une unité de traitement rend la chaîne correspondante totalement inopérante. La défaillance d'une carte rend la chaîne correspondante inopérante à partir de cette carte défaillante, pour les autres cartes disposées en aval par rapport à l'unité de traitement disposée en amont. Une telle défaillance d'un élément diminue donc de manière importante la fiabilité de l'ensemble des deux chaînes. En outre, un mode commun important est présent entre les deux unités de traitement, ce qui réduit aussi la fiabilité de l'ensemble des deux chaînes.

L'invention a pour but de proposer un système électronique avec redondance d'éléments dont la disponibilité et la fiabilité sont améliorées.

A cet effet, l'invention a pour objet un système électronique du type précité, caractérisé en ce que la première et la deuxième unité de traitement ne sont pas directement reliées entre elles par une liaison filiaire de communication et en ce que chaque port de communication est activable par une commande logicielle d'activation, et en ce que chaque port de communication est désactivable par une commande logicielle de désactivation.

Un tel système est revendiqué dans la revendication 1. Les caractéristiques définies dans le préambule de cette dernière sont connues du document EP-0 399 308.

Suivant d'autres modes de réalisation, le système électronique comprend une ou plusieurs des caractéristiques suivantes, prises isolément ou suivant toutes les combinaisons techniquement possibles :
- le système comporte une pluralité de premières cartes et de deuxièmes cartes, les premières cartes étant connectées en série les unes des autres de manière à former une première chaîne de premières cartes, la première carte disposée au début de la première chaîne étant reliée à la première unité de traitement, et la première carte disposée à la fin de la première chaîne étant connectée à la deuxième unité de traitement, les deuxièmes cartes sont connectées en série les unes des autres de manière à former une deuxième chaîne de deuxièmes cartes, la deuxième carte disposée au début de la deuxième chaîne étant connectée à la deuxième unité de traitement, et la deuxième carte située à la fin de la deuxième chaîne étant connectée à la première unité de traitement, et chaque deuxième carte est apte à acquérir les mêmes signaux d'entrée qu'une première carte respective, les signaux d'entrée étant propres à être délivrés par au moins un capteur et apte à générer les mêmes signaux de sortie que la première carte respective, les signaux de sortie étant propres à commander au moins un actionneur,
- la première et la deuxième cartes respectives sont disposées au même emplacement dans la première chaîne et dans la deuxième chaîne,
- chaque unité de traitement est propre à être pilotée à distance via une liaison série asynchrone,
- chaque port de communication est un port de données bidirectionnel,
- une liaison filaire de communication est électroniquement inhibée lorsqu'un port de communication connecté à une des extrémités de cette liaison filaire est désactivé par la commande logicielle de désactivation,
- un bus de communication comporte une seule unité de traitement et au moins une carte, l'unité de traitement et la ou chaque carte étant reliées en série, le bus étant commandé par un seul maître,
- le maître du bus est une unité de traitement, et la topologie du bus est configurable par l'intermédiaire des commandes logicielles d'activation et de désactivation,
- chaque liaison filaire de communication est une liaison de type EtherCat.

L'invention a également pour objet une chaîne d'entraînement, comprenant un moteur électrique et un système de vérification du bon fonctionnement, caractérisée en ce que le système de vérification est un système électronique tel que défini ci-dessus.

L'invention et ses avantages apparaîtront plus clairement à la lecture de la description qui va suivre, donnée uniquement à titre d'exemple et faite en référence aux dessins annexés, sur lesquels :
- la figure 1 est une représentation schématique d'une chaîne d'entraînement selon l'invention,
- la figure 2 est une représentation schématique d'un système électronique avec redondance de la chaîne de contrôle de la figure 1, et
- la figure 3 est une vue analogue à celle de la figure 2, dans le cas d'une défaillance d'une unité de traitement et d'une carte d'acquisition et/ou de génération.

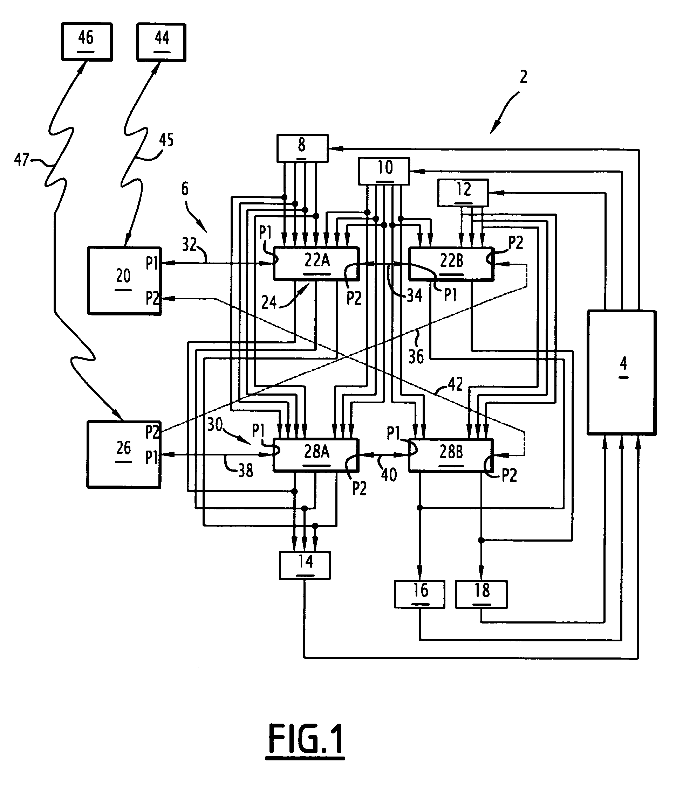

Sur la figure 1, une chaîne d'entraînement 2 comprend un moteur électrique 4 et un système électronique 6 de vérification et de commande du bon fonctionnement du moteur. La chaîne d'entraînement 2 est, par exemple, disposée dans un caisson étanche et immergé en mer. Le moteur 4 est, par exemple, un compresseur sous-marin.

Dans l'exemple de réalisation de la figure 1, le moteur électrique 4 est relié à un premier capteur 8, un deuxième capteur 10 et un troisième capteur 12, chacun étant destiné à mesurer des grandeurs caractéristiques du moteur 4, telles que, par exemple, la température, la vitesse de rotation, le couple de rotation. Le moteur 4 est également relié à un premier actionneur 14, un deuxième actionneur 16 et un troisième actionneur 18, destinés à transmettre des signaux d'excitation au moteur 4.

Le système électronique 6, visible sur les figures 1 à 3, comprend une première unité de traitement 20 et une pluralité de premières cartes 22A, 22B, les premières cartes 22A, 22B étant connectées en série les unes aux autres pour la transmission bidirectionnelle d'informations, de manière à former une première chaîne 24 de premières cartes.

La première unité 20 est apte à mettre en oeuvre des algorithmes, et chaque première carte est destinée à acquérir des signaux d'entrée propres à être délivrés par au moins un capteur 8, 10, 12, et/ou à générer des signaux de sortie propres à commander au moins un actionneur 14, 16, 18. Dans l'exemple de réalisation de la figure 1, la première carte 22A disposée au début de la première chaîne 24 est propre à recevoir des signaux issus du premier capteur 8 et du deuxième capteur 10. La première carte 22B disposée à la fin de la première chaîne 24 est propre à recevoir des signaux issus du deuxième capteur 10 et du troisième capteur 12. La première carte de début 22A est propre à générer des signaux de sortie à destination du premier actionneur 14. La première carte de fin 22B est propre à générer un signal de sortie à destination du deuxième actionneur 16 et un autre signal de sortie à destination du troisième actionneur 18.

Le système électronique 6 comporte également une deuxième unité de traitement 26 et une pluralité de deuxièmes cartes 28A, 28B, les deuxièmes cartes 28A, 28B étant connectées en série les unes des autres de manière à former une deuxième chaîne 30 de deuxièmes cartes.

La deuxième unité 26 est apte à mettre en oeuvre les mêmes algorithmes que ceux mis en oeuvre par la première unité 20. Chaque deuxième carte 28A, 28B est destinée à acquérir les mêmes signaux d'entrée qu'une première carte 22A, 22B respective, et à générer les mêmes signaux de sortie que la première carte 22A, 22B respective. Dans l'exemple de réalisation de la figure 1, la deuxième carte 28A disposée au début de la deuxième chaîne 30 est propre à acquérir les mêmes signaux d'entrée et à générer les mêmes signaux de sortie que la première carte de début 22A. Autrement dit, la deuxième carte de début 28A est reliée au premier capteur 8 et au deuxième capteur 10, afin de recevoir les signaux issus de ces capteurs, et au premier actionneur 14 afin de lui délivrer les signaux de sortie correspondants.

La deuxième carte 28B disposée à la fin de la deuxième chaîne 30 est propre à acquérir les mêmes signaux d'entrée et à générer les mêmes signaux de sortie que la première carte de fin 22B. Autrement dit, la deuxième carte de fin 28B est reliée au deuxième capteur 10 et au troisième capteur 12 afin de recevoir les signaux d'entrée issus de ces capteurs, et au deuxième actionneur 16 et au troisième actionneur 18, afin de délivrer à chacun le signal de sortie correspondant.

La deuxième unité 26 est donc fonctionnellement identique à la première unité 20, et chaque deuxième carte 28A, 28B est fonctionnellement identique à une première carte 22A, 22B respective. En d'autres termes, la deuxième unité 26 est redondante de la première unité 20, et chaque deuxième carte 28A, 28B est redondante d'une première carte 22A, 22B respective.

La première et la deuxième unités 20, 26 sont réalisées avec des technologies de fabrication distinctes. Chaque première carte 22A, 22B et chaque deuxième carte 28A, 28B respective sont réalisées avec des technologies de fabrication différentes. En variante, la deuxième unité 26 est strictement identique à la première unité 20, et chaque deuxième carte 28A, 28B est strictement identique à une première carte 22A, 22B respective.

Dans l'exemple de réalisation de la figure 1, la première carte 22A, 22B et la deuxième carte 28A, 28B respective sont disposées au même emplacement dans la première chaîne 24 et dans la deuxième chaîne 30.

Chaque unité de traitement 20, 26 et chaque carte 22A, 22B, 28A, 28B comportent un premier port P1 et un deuxième port P2 de communication.

Le premier port P1 de la première unité 20 est connecté par une liaison filaire de communication 32 au premier port P1 de la première carte de début 22A disposée au début de la première chaîne 24. Le deuxième port P2 de la première carte de début 22A est connecté au premier port P1 de la première carte successive, en l'occurrence de la première carte de fin 22B disposée à la fin de la première chaîne 24, par une autre liaison filaire de communication 34. Le deuxième port P2 de la première carte de fin 22B est connecté au deuxième port P2 de la deuxième unité 26 par une autre liaison filaire de communication 36.

Le premier port P1 de la deuxième unité 26 et le premier port P1 de la deuxième carte de début 28A disposée au début de la deuxième chaîne 30 sont connectés entre eux par une autre liaison filaire de communication 38. Le deuxième port P2 de la deuxième carte de début 28A est connecté au premier port P1 de la deuxième carte successive, en l'occurrence de la deuxième carte de fin 28B disposée à la fin de la deuxième chaîne 30, par une autre liaison filaire de communication 40. Le deuxième port P2 de la deuxième carte de fin 28B et le deuxième port P2 de la première unité 20 sont connectés entre eux par une dernière liaison filaire de communication 42.

La première unité 20 et la deuxième unité 26 ne sont pas directement reliées entre elles par une liaison filaire de communication.

Chaque port de communication P1, P2 est un port de données bidirectionnel. Chaque liaison filaire de communication 32 à 42 est une liaison de données bidirectionnelle. Chaque liaison filaire de communication 32 à 42 est, par exemple, une liaison de type EtherCat.

La première unité de traitement 20 est propre à être pilotée à distance par un premier dispositif de commande 44 via une première liaison de commande 45. La deuxième unité de traitement 26 est propre à être pilotée à distance par un deuxième dispositif de commande 46 via une deuxième liaison de commande 47. Les liaisons de commande 45, 47 sont, par exemple, des liaisons filaires. Les liaisons de commande 45, 47 sont des liaisons série asynchrones, immergées en mer, également appelées liaisons modem sous-marines.

Chaque port de communication P1, P2 est activable par une commande logicielle d'activation, et désactivable par une commande logicielle de désactivation. Les commandes logicielles d'activation ou de désactivation sont transmises par le premier ou le deuxième dispositif de commande 44, 46 à l'unité 20, 26 ou à la carte 22A, 22B, 28A, 28B correspondante via la liaison de commande 45, 47 puis les liaisons filaires 32 à 42 respective. Une liaison filaire de communication 32 à 42 est électroniquement inhibée lorsqu'un port de communication P1, P2 connecté à une de ses extrémités est désactivé par la commande logicielle de désactivation. Autrement dit, lorsqu'un port de communication P1, P2 est désactivé, il est toujours relié par un lien matériel avec le port de communication P1, P2 correspondant, mais aucune donnée n'est propre à être échangée entre ce port de communication désactivé et le port de communication connecté à l'autre extrémité de la liaison filaire correspondante.

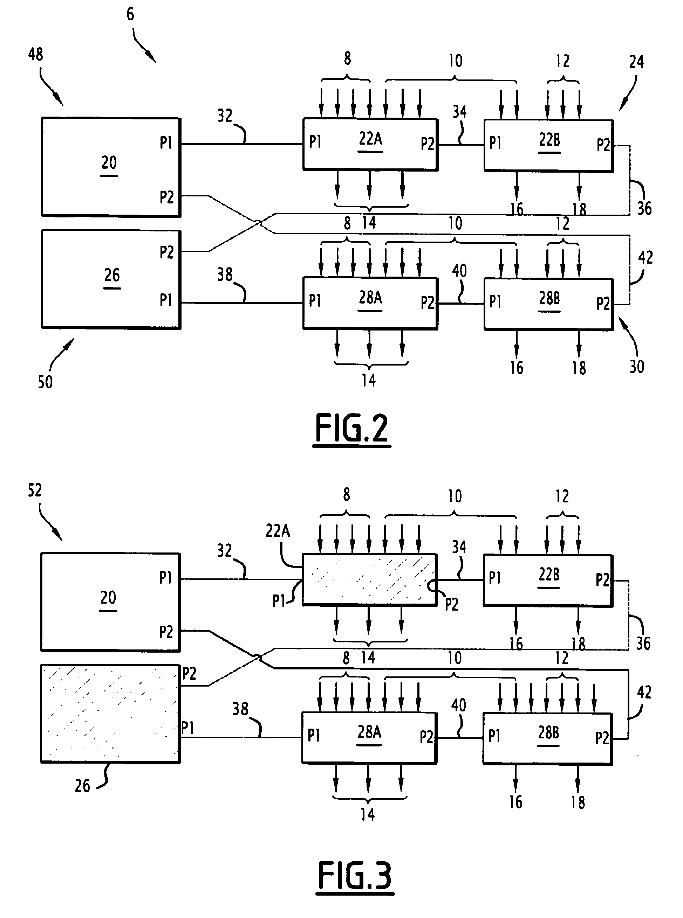

Le fonctionnement du système électronique selon l'invention va désormais être expliqué à l'aide des figures 2 et 3. La figure 2 illustre le fonctionnement du système 6 en mode nominal. La figure 3 illustre le fonctionnement du système 6 en mode avec défaillance.

Afin de faciliter la lecture des figures 2 et 3, les liaisons entre les premières cartes 22A, 22B, respectivement les deuxièmes cartes 28A, 28B, et les capteurs 8, 10, 12, respectivement les actionneurs 14, 16, 18, sont représentées sous forme d'une accolade avec la référence correspondante du capteur, respectivement de l'actionneur.

Un bus de communication mettant en oeuvre les liaisons filaires de type EtherCat doit être commandé par un seul maître. Le maître du bus étant une unité de traitement 20, 26, un bus de communication du système électronique 6 comporte une seule unité de traitement 20, 26 et au moins une carte 22A, 22B, 28A, 28B. L'unité de traitement 20, 26 et la ou chaque carte 22A, 22B, 28A, 28B sont nécessairement reliées en série, ou encore en cascade, la liaison de communication de type ETHERCAT étant une liaison de communication point à point. La topologie de chaque bus de communication du système électronique 6 est configurable par l'intermédiaire des commandes logicielles d'activation et de désactivation.

En mode de fonctionnement nominal, c'est-à-dire lorsque toutes les unités 20, 26 et toutes les cartes d'acquisition et ou de génération 22A, 22B, 28A, 28B sont fonctionnelles, et comme représenté sur la figure 2, un opérateur agit sur le premier dispositif de commande 44 afin de transmettre à la première unité 20 la commande logicielle de désactivation de son deuxième port P2. Suite à l'intervention de l'opérateur, le premier dispositif 44 transmet également à la première unité 20 la commande logicielle d'activation de son premier port P1, puis transmet en cascade à la première carte de début 22A les commandes logicielles d'activation de son premier port P1 et de son deuxième port P2, et enfin à la première carte de fin 22B les commandes logicielles d'activation de son premier port P1 et de son deuxième port P2. Un premier bus de communication 48 est alors formé de la première unité 20 et des premières cartes 22A, 22B.

L'opérateur agit de la même manière sur le deuxième dispositif de commande 46 afin de transmettre à la deuxième unité 26 la commande logicielle de désactivation de son deuxième port P2, puis la commande logicielle d'activation de son premier port P1. Le deuxième dispositif 46 transmet ensuite successivement à la deuxième carte de début 28A la commande logicielle d'activation de son premier port P1 et la commande logicielle d'activation de son deuxième port P2, puis à la deuxième carte de fin 28B la commande logicielle d'activation de son premier port P1 et la commande logicielle d'activation de son deuxième port P2. Un deuxième bus de communication 50 est alors formé de la deuxième unité 26 et des deuxièmes cartes 28A, 28B. Les bus de communication 48, 50 fonctionnent indépendamment l'un de l'autre et sans échanger de données entre eux, de sorte qu'il n'existe pas de mode commun entre les bus 48, 50.

En mode de fonctionnement nominal, les liaisons de communication 36, 42, entre les deuxièmes ports P2 de la première carte de fin 22B et de la deuxième unité 26, respectivement entre les deuxièmes ports P2 de la deuxième carte de fin 28B et de la première unité 20, sont électroniquement inhibées (représentées en traits pointillés). Les autres liaisons filaires de communication 32, 34, 38 et 40 sont actives (représentées en traits pleins).

La figure 3 illustre le cas d'une défaillance de la deuxième unité de traitement 26 et de la première carte de début 22A, représentées avec des hachures.

Il est d'ailleurs à noter que, dans un tel cas de défaillance, un système redondant classique serait totalement inopérant, puisque la transmission de l'information dans la première chaîne serait coupée dès le début avec la défaillance de la carte disposée au début de la première chaîne, et que la deuxième chaîne serait également inopérante de par la défaillance de la deuxième unité de traitement.

Avec le système électronique selon l'invention, lorsque l'opérateur détecte une telle défaillance de la deuxième unité 26 et de la première carte de début 22A, il agit sur le premier dispositif 44 afin de transmettre successivement à la première unité 20 la commande logicielle de désactivation de son premier port P1 puis la commande logicielle d'activation de son deuxième port P2. La liaison de communication 32 entre la première unité 20 et la première carte de début 22A est alors électroniquement inhibée (représentée en traits pointillés), et la liaison de communication 42 entre la première unité 20 et la deuxième carte de fin 28B est active et opérationnelle (représentée en traits pleins). Un bus de communication 52 est alors formé de la première unité 20, de la deuxième carte de fin 28B et de la deuxième carte de début 28A.

A cet instant, chaque port de communication P1, P2 de la deuxième carte de fin 28B et de la deuxième carte de début 28A est toujours actif. Afin de s'assurer que la deuxième unité 26 défaillante ne perturbera pas le bus de communication 52, l'opérateur agit sur le premier dispositif 44 afin de transmettre à la deuxième carte de début 28A la commande logicielle de désactivation de son premier port P1. La liaison de communication 38 entre la deuxième unité 26 et la deuxième carte de début 28A est alors électroniquement inhibée (représentée en traits pointillés).

Le bus de communication 52, reconfiguré de manière logicielle et « à froid », c'est-à-dire suite à une intervention humaine, permet ainsi de proposer un système électronique de vérification du bon fonctionnement du moteur, qui est toujours opérationnel malgré la défaillance de la deuxième unité 26 et de la première carte de début 22A.

De manière générale, lorsque l'opérateur détecte une défaillance d'un des éléments du système électronique 6, par l'intermédiaire du premier dispositif 44 ou du deuxième dispositif 46, il cherchera à reconfigurer à froid, à l'aide des commandes logicielles d'activation et de désactivation, un bus de communication comportant une seule unité de traitement et toutes les cartes d'une des deux chaînes 24, 30, l'unité et les cartes étant fonctionnelles. A défaut d'avoir au moins une unité de traitement et au moins toutes les cartes d'une chaîne 24, 30 fonctionnelles, l'opérateur reconfigurera à froid un bus de communication comportant une unité de traitement 20, 26 fonctionnelle et au moins une carte d'acquisition et/ou de génération fonctionnelle.

On conçoit ainsi que le système électronique selon l'invention présente une maintenance et une fiabilité nettement améliorées. En effet, la reconfiguration du système électronique permet de garantir le bon fonctionnement du système malgré la défaillance de certains de ces éléments. En outre, aucun mode commun n'est présent entre la première unité 20 et la deuxième unité 26, les unités 20, 26 n'étant pas connectées entre elles, ce qui améliore également la fiabilité du système électronique 6.

En variante, le système électronique 6 comporte une unique première carte 22 et une unique deuxième carte 28.

En variante, le système électronique 6 comporte une pluralité de premières cartes et une pluralité de deuxièmes cartes, le nombre de premières cartes étant identique au nombre de deuxièmes cartes, et supérieur ou égal à trois.

En variante, la première unité de traitement 20 et la deuxième unité de traitement 26 sont propres à être commandées à distance par un unique dispositif de commande, les données entre le dispositif de commande et la première unité 20 d'une part, et la deuxième unité 26 d'autre part, étant transmises successivement et sans mode commun entre la première unité 20 et la deuxième unité 26. la commande à distance des deux unités de traitement 20,26 par un unique dispositif de commande n'a pas d'incidence sur la fiabilité du système électronique selon l'invention, puisque le dispositif de commande, extérieur au système électronique, est accessible et facilement échangeable en cas de défaillance.

En variante, les liaisons de commande 45, 47 sont des liaisons sans fil, par exemple des liaisons radioélectriques.

## Revendications

1. Système électronique (6) avec redondance d'éléments, comprenant :
- une première unité de traitement (20), apte à mettre en oeuvre des algorithmes, reliée à une première carte (22A) d'acquisition de signaux d'entrée propres à être délivrés par au moins un capteur (8, 10, 12) et/ou de génération de signaux de sortie propres à commander au moins un actionneur (14, 16, 18),
- une deuxième unité de traitement (26) apte à mettre en oeuvre les mêmes algorithmes que ceux mis en oeuvre par la première unité (20), et reliée à une deuxième carte (28A) d'acquisition des mêmes signaux d'entrée propres à être délivrés par le capteur (8, 10, 12) que ceux reçus par la première carte (22A) et/ou de génération des mêmes signaux de sortie propres à commander l'actionneur (14, 16, 18) que ceux générés par la première carte (22A),
chaque unité de traitement (20, 26) et chaque carte (22A, 28A) comportant un premier port de communication (P1), les premiers ports de communication (P1) de la première unité (20) et de la première carte (22A), respectivement de la deuxième unité (26) et de la deuxième carte (28A), étant connectés entre eux par une liaison filaire de communication (32, 38),
chaque unité de traitement (20, 26) et chaque carte (22A, 28A) comportant un deuxième port de communication (P2), le deuxième port (P2) de la première carte (22A) étant connecté au deuxième port (P2) de la deuxième unité (26) par une liaison filaire de communication, le deuxième port (P2) de la deuxième carte (28A) étant connecté au deuxième port (P2) de la première unité (20) par une liaison filaire de communication,
**caractérisé en ce que** la première et la deuxième unités de traitement (20, 26) ne sont pas directement reliées entre elles par une liaison filaire de communication, **en ce que** chaque port de communication (P1, P2) est activable par une commande logicielle d'activation, et **en ce que** chaque port de communication (P1, P2) est désactivable par une commande logicielle de désactivation.

2. Système (6) selon la revendication 1, **caractérisé en ce qu'**il comporte une pluralité de premières cartes (22A, 22B) et de deuxièmes cartes (28A, 28B), les premières cartes (22A, 22B) étant connectées en série les unes des autres de manière à former une première chaîne (24) de premières cartes, la première carte (22A) disposée au début de la première chaîne (24) étant reliée à la première unité de traitement (20), et la première carte (22B) disposée à la fin de la première chaîne (24) étant connectée à la deuxième unité de traitement (26), **en ce que** les deuxièmes cartes (28A, 28B) sont connectées en série les unes des autres de manière à former une deuxième chaîne (30) de deuxièmes cartes, la deuxième carte (28A) disposée au début de la deuxième chaîne (30) étant connectée à la deuxième unité de traitement (26), et la deuxième carte (28B) située à la fin de la deuxième chaîne (30) étant connectée à la première unité de traitement (20), et **en ce que** chaque deuxième carte (28A, 28B) est apte à acquérir les mêmes signaux d'entrée qu'une première carte (22A, 22B) respective, les signaux d'entrée étant propres à être délivrés par au moins un capteur (8, 10, 12), et apte à générer les mêmes signaux de sortie que la première carte (22A, 22B) respective, les signaux de sortie étant propres à commander au moins un actionneur (14, 16, 18).

3. Système (6) selon la revendication 2, **caractérisé en ce que** la première (22A, 22B) et la deuxième (28A, 28B) cartes respectives sont disposées au même emplacement dans la première chaîne (24) et dans la deuxième chaîne (30).

4. Système (6) selon l'une quelconque des revendications précédentes, **caractérisé en ce que** chaque unité de traitement (20, 26) est propre à être pilotée à distance via une liaison série asynchrone (45, 47).

5. Système (6) selon l'une quelconque des revendications précédentes, **caractérisé en ce que** chaque port de communication (P1, P2) est un port de données bidirectionnel.

6. Système (6) selon l'une quelconque des revendications précédentes, **caractérisé en ce qu'**une liaison filaire de communication (32 à 42) est électroniquement inhibée lorsqu'un port de communication (P1, P2) connecté à une des extrémités de cette liaison filaire (32 à 42) est désactivé par la commande logicielle de désactivation.

7. Système (6) selon l'une quelconque des revendications précédentes, **caractérisé en ce qu'**un bus de communication (48, 50, 52) comporte une seule unité de traitement (20, 26) et au moins une carte (22A, 22B, 28A, 28B), l'unité de traitement (20, 26) et la ou chaque carte (22A, 22B, 28A, 28B) étant reliées en série, le bus (48, 50, 52) étant commandé par un seul maître.

8. Système (6) selon la revendication 7, **caractérisé en ce que** le maître du bus (48, 50, 52) est une unité de traitement (20, 26), et **en ce que** la topologie du bus est configurable par l'intermédiaire des commandes logicielles d'activation et de désactivation.

9. Système (6) selon l'une quelconque des revendications précédentes, **caractérisé en ce que** chaque liaison filaire de communication (32, 34, 36, 38, 40, 42) est une liaison de type EtherCat.

10. Chaîne d'entraînement (2), comprenant un moteur électrique (4) et un système (6) de vérification du bon fonctionnement du moteur (4), **caractérisée en ce que** le système (6) est conforme à l'une quelconque des revendications 1 à 9.

## Claims

1. An electronic system (6) with redundancy of elements, comprising:
- a first processing unit (20), able to carry out algorithms, connected to a first card (22A) for acquiring input signals that can be delivered by at least one sensor (8, 10, 12) and/or generating output signals that can control at least one actuator (14, 16, 18),
- a second processing unit (26) that can implement the same algorithms as those implemented by the first unit (20), and connected to a second card (28A) for acquiring the same input signals that can be delivered by the sensor (8, 10, 12) as those received by the first card (22A) and/or for generating the same output signals that can control the actuator (14, 16, 18) as those generated by the first card (22A),
each processing unit (20, 26) and each card (22A, 28A) including a first communication port (P1), the first communication ports (P1) of the first unit (20) and the first card (22A), respectively of the second unit (26) and the second card (28A), being connected to each other by a wired communication link (32, 38),
each processing unit (20, 26) and each card (22A, 28A) including a second communication port (P2), the second port (P2) of the first card (22A) being connected to the second port (P2) of the second unit (26) by a wired communication link, the second port (P2) of the second card (28A) being connected to the second port (P2) of the first unit (20) by a wired communication link,
**characterized in that** the first and second processing units (20, 26) are not directly connected to one another by a wired communication link, **in that** each communication port (P1, P2) can be activated by an activation software command, and **in that** each communication port (P1, P2) can be deactivated by a deactivation software control.

2. The system (6) according to claim 1, **characterized in that** it includes a plurality of first cards (22A, 22B) and second cards (28A, 28B), the first cards (22A, 22B) being serially connected to one another so as to form a first chain (24) of first cards, the first card (22A) arranged at the beginning of the first chain (24) being connected to the first processing unit (20), and the first card (22B) arranged at the end of the first chain (24) being connected to the second processing unit (26), **in that** the second cards (28A, 28B) are serially connected to one another so as to form a second chain (30) of second cards, the second card (28A) arranged at the beginning of the second chain (30) being connected to the second processing unit (26), and the second card (28B) situated at the end of the second chain (30) being connected to the first processing unit (20), and **in that** each second card (28A, 28B) can acquire the same input signals as a first respective card (22A, 22B), the input signals being able to be delivered by at least one sensor (8, 10, 12), and able to generate the same output signals as the first respective card (22A, 22B), the output signals being able to control at least one actuator (14, 16, 18).

3. The system (6) according to claim 2, **characterized in that** the first (22A, 22B) and second (28A, 28B) respective cards are arranged at the same location in the first chain (24) and in the second chain (30).

4. The system (6) according to any one of the preceding claims, **characterized in that** each processing unit (20, 26) can be driven remotely via an asynchronous serial connection (45, 47).

5. The system (6) according to any one of the preceding claims, **characterized in that** each communication port (P1, P2) is a two-way data port.

6. The system (6) according to any one of the preceding claims, **characterized in that** a wired communication link (32 to 42) is electronically inhibited when a communication port (P1, P2) connected to one of the ends of said wired link (32 to 42) is deactivated by the software deactivation control.

7. The system (6) according to any one of the preceding claims, **characterized in that** a communication bus (48, 50, 52) includes a single processing unit (20, 26) and at least one card (22A, 22B, 28A, 28B), the processing unit (20, 26) and the or each card (22A, 22B, 28A, 28B) being serially connected, the bus (48, 50, 52) being controlled by a single master.

8. The system (6) according to claim 7, **characterized in that** the master of the bus (48, 50, 52) is a processing unit (20, 26), and **in that** the topology of the bus is configurable via software activation and deactivation commands.

9. The system (6) according to any one of the preceding claims, **characterized in that** each wired communication link (32, 34, 36, 38, 40, 42) is a link of the EtherCat type.

10. A motor chain (2), comprising an electric motor (4) and a system (6) for verifying the proper operation of the motor (4), **characterized in that** the system (6) is according to any one of claims 1 to 9.

## Patentansprüche

1. Elektronisches System (6) mit Elementeredundanz, das umfasst:
- eine erste Verarbeitungseinheit (20), die imstande ist, Algorithmen umzusetzen, die mit einer ersten Karte (22A) zur Erfassung von Eingangssignalen verbunden ist, die geeignet sind, von mindestens einem Sensor (8, 10, 12) bereitgestellt zu werden und/oder zur Erzeugung von Ausgangssignalen, die geeignet sind, mindestens einen Aktuator (14, 16, 18) zu steuern,
- eine zweite Verarbeitungseinheit (26) die imstande ist, dieselben Algorithmen umzusetzen wie die, die von der ersten Einheit (20) umgesetzt werden, und die mit einer zweiten Karte (28A) zur Erfassung derselben Eingangssignale verbunden ist, die geeignet sind, von dem Sensor (8, 10, 12) bereitgestellt zu werden wie die Signale, die von der ersten Karte (22A) empfangen wurden und/oder zur Erzeugung derselben Ausgangssignale wie die, die von der ersten Karte (22A) erzeugt wurden, die geeignet sind, den Aktuator (14, 16, 18) zu steuern,
wobei jede Verarbeitungseinheit (20, 26) und jede Karte (22A, 28A) einen ersten Kommunikationsport (P1) aufweisen, wobei die ersten Kommunikationsports (P1) der ersten Einheit (20) und der ersten Karte (22A) beziehungsweise der zweiten Einheit (26) und der zweiten Karte (28A) miteinander durch eine drahtgebundene Kommunikationsverbindung (32, 38) verbunden sind,
wobei jede Verarbeitungseinheit (20, 26) und jede Karte (22A, 28A) einen zweiten Kommunikationsport (P2) aufweisen, wobei der zweite Port (P2) der ersten Karte (22A) mit dem zweiten Port (P2) der zweiten Einheit (26) durch eine drahtgebundene Kommunikationsverbindung verbunden ist, wobei der zweite Port (P2) der zweiten Karte (28A) mit dem zweiten Port (P2) der ersten Einheit (20) durch eine drahtgebundene Kommunikationsverbindung verbunden ist,
**dadurch gekennzeichnet, dass** die erste und die zweite Verarbeitungseinheit (20, 26) nicht direkt durch eine drahtgebundene Kommunikationsverbindung miteinander verbunden sind und dass jeder Kommunikationsport (P1, P2) durch einen Software-Aktivierungsbefehl aktivierbar ist und dass jeder Kommunikationsport (P1, P2) durch einen Software-Deaktivierungsbefehl deaktivierbar ist.

2. System (6) nach Anspruch 1, **dadurch gekennzeichnet, dass** es eine Vielzahl erster Karten (22A, 22B) und zweiter Karten (28A, 28B) aufweist, wobei die ersten Karten (22A, 22B) derart miteinander in Reihe geschaltet sind, dass sie eine erste Kette (24) erster Karten bilden, wobei die erste Karte (22A), die am Anfang der ersten Kette (24) angeordnet ist, mit der ersten Verarbeitungseinheit (20) verbunden ist, und die erste Karte (22B), die am Ende der ersten Kette (24) angeordnet ist, mit der zweiten Verarbeitungseinheit (26) verbunden ist, und dass die zweiten Karten (28A, 28B) derart miteinander in Reihe geschaltet sind, dass sie eine zweite Kette (30) zweiter Karten bilden, wobei die zweite Karte (28A), die am Anfang der zweiten Kette (30) angeordnet ist, mit der zweiten Verarbeitungseinheit (26) verbunden ist, und die zweite Karte (28B), die sich am Ende der zweiten Kette (30) befindet, mit der ersten Verarbeitungseinheit (20) verbunden ist, und dass jede zweite Karte (28A, 28B) imstande ist, dieselben Eingangssignale wie eine jeweilige erste Karte (22A, 22B) zu erfassen, wobei die Eingangssignale geeignet sind, durch mindestens einen Sensor (8, 10, 12) bereitgestellt zu werden, und imstande, dieselben Ausgangssignale wie die jeweilige erste Karte (22A, 22B) zu erzeugen, wobei die Ausgangssignale geeignet sind, mindestens einen Aktuator (14, 16, 18) zu steuern.

3. System (6) nach Anspruch 2, **dadurch gekennzeichnet, dass** die jeweiligen ersten (22A, 22B) und zweiten (28A, 28B) Karten in der ersten Kette (24) und in der zweiten Kette (30) an derselben Stelle angeordnet sind.

4. System (6) nach einem der vorangehenden Ansprüche, **dadurch gekennzeichnet, dass** jede Verarbeitungseinheit (20, 26) geeignet ist, über eine asynchrone Serienverbindung (45, 47) ferngesteuert zu werden.

5. System (9) nach einem der vorangehenden Ansprüche, **dadurch gekennzeichnet, dass** jeder Kommunikationsport (P1, P2) ein bidirektionaler Datenport ist.

6. System (6) nach einem der vorangehenden Ansprüche, **dadurch gekennzeichnet, dass** eine drahtgebundene Kommunikationsverbindung (32 bis 42) elektronisch gesperrt ist, wenn ein mit einem Ende dieser drahtgebundenen Verbindung (32 bis 42) verbundener Kommunikationsport (P1, P2) durch den Software-Deaktivierungsbefehl deaktiviert ist.

7. System (6) nach einem der vorangehenden Ansprüche, **dadurch gekennzeichnet, dass** ein Kommunikationsbus (48, 50, 52) eine einzige Verarbeitungseinheit (20, 26) und mindestens eine Karte (22A, 22B, 28A, 28B) aufweist, wobei die Verarbeitungseinheit (20, 26) und die oder jede Karte (22A, 22B, 28A, 28B) in Reihe verbunden sind, wobei der Bus (48, 50, 52) von einem einzigen Master gesteuert wird.

8. System (6) nach Anspruch 7, **dadurch gekennzeichnet, dass** der Master des Busses (48, 50, 52) eine Verarbeitungseinheit (20, 26) ist und dass die Topologie des Busses über Software-Aktivierungs- und Deaktivierungsbefehle konfigurierbar ist.

9. System (6) nach einem der vorangehenden Ansprüche, **dadurch gekennzeichnet, dass** jede drahtgebundene Kommunikationsverbindung (32, 34, 36, 38, 40, 42) eine Verbindung vom Typ EtherCat ist.

10. Antriebskette (2), die einen Elektromotor (4) und ein System (6) zur Überprüfung der störungsfreien Funktion des Motors (4) umfasst, **dadurch gekennzeichnet, dass** das System (6) einem der Ansprüche 1 bis 10 entspricht.
